# EUROPÄISCHE PATENTSCHRIFT

(11) **EP 3 256 509 B1**
(45) Veröffentlichungstag und Bekanntmachung des Hinweises auf die Patenterteilung: **24.04.2019**
(21) Anmeldenummer: 16700608.9
(22) Anmeldetag: 14.01.2016
(51) Int. Cl.: C08G 18/62, C09D 169/00, C08G 18/40, C08G 18/44, C09D 175/04, C09D 175/06

(54) **ZWEIKOMPONENTEN-BESCHICHTUNGSZUSAMMENSETZUNGEN UND DARAUS HERGESTELLTE BESCHICHTUNGEN ZUR VERBESSERUNG DER EROSIONSBESTÄNDIGKEIT**
TWO COMPONENT COATING COMPOSITIONS AND COATINGS PRODUCED FROM THE SAME FOR IMPROVED EROSION RESISTANCE
COMPOSITIONS DE REVÊTEMENT À DEUX COMPOSANTS ET REVÊTEMENTS AINSI FABRIQUÉS DESTINÉS À L'AMÉLIORATION DE LA RÉSISTANCE À L'ÉROSION

(30) Priorität: 10.02.2015 EP 15154441
(43) Veröffentlichungstag der Anmeldung: 20.12.2017
(73) Patentinhaber: Akzo Nobel Coatings International B.V., 6824 BM Arnhem (NL)
(72) Erfinder: SEEGER, Dirk, 26125 Oldenburg (DE); MÜLLER, Harald, 27798 Hude/Wüsting (DE); MEYERJÜRGENS, Andreas, 26125 Oldenburg (DE)
(74) Vertreter: Akzo Nobel IP Department
(86) Internationale Anmeldenummer: PCT/EP2016/050654
(87) Internationale Veröffentlichungsnummer: WO 2016/128166

(56) Entgegenhaltungen:
- EP-A2- 1 923 414
- WO-A1-2010/122157
- WO-A1-2012/032113

## Beschreibung

Die vorliegende Erfindung betrifft Zweikomponenten-Beschichtungszusammensetzungen sowie daraus hergestellte Beschichtungen. Die vorliegende Erfindung betrifft auch ein Verfahren zur Herstellung dieser Beschichtungen sowie die Verwendung der Beschichtungszusammensetzung zur Herstellung von Beschichtungen. Nicht zuletzt betrifft die vorliegende Erfindung die Verwendung der Beschichtungszusammensetzungen zur Verbesserung der Erosionsbeständigkeit.

### Stand der Technik

In verschiedenen Einsatzbereichen besteht ein Bedarf an Beschichtungen, die hohen mechanischen Ansprüchen genügen. Beispielhaft zu nennen sind hier Oberflächen von Objekten, die hinsichtlich der Umgebungsbedingungen hohen Geschwindigkeiten bei gleichzeitiger Belastung durch erodierende Stoffe, beispielsweise Feststoffe oder Flüssigkeiten, ausgesetzt sind. Eine erodierende Belastung erfahren also grundsätzlich Objekte, die einerseits selbst bewegt werden, und andererseits dem Einfluss erodierende Stoffe ausgesetzt sind. Insbesondere zu nennen sind Rotorblätter von Windenergieanlagen oder Hubschraubern und Schiffsschrauben, Luft- und Landfahrzeuge (wie beispielsweise Flugzeuge, Schienenfahrzeuge, Automobile) und Schiffe.

Grundsätzlich können Erosionen hervorgerufen werden durch flüssige oder feste Stoffe, die selbst oder dispers beziehungsweise gelöst in einem anderen gasförmigen oder flüssigen Medium (beispielsweise Luft oder Wasser) vorliegen und durch dieses Medium bewegt werden (beispielsweise Flugsand, Regen und/oder Hagel). Beim Auftreffen auf Objekte beziehungsweise deren Oberflächen wird auf diese eine erodierende Kraft ausgeübt. Beispiele dafür sind die Erosion durch Regen oder Flugsand an Rotorblättern oder im Bereich der Vorflügel von Flugzeugen. Besonders stark sind die erodierenden Einflüsse im Bereich von Kanten der entsprechenden Objekte.

Generell besteht die Möglichkeit, den Verschleißschutz, das heißt insbesondere die Erosionsbeständigkeit, von Objekten durch Beschichtungen der Oberflächen der Objekte zu steuern. Um eine gute Erosionsbeständigkeit zu erhalten, ist bekanntermaßen ein genau abgestimmtes Verhältnis von Flexibilität beziehungsweise Elastizität der Beschichtung einerseits und andererseits der Härte der Beschichtung wichtig. Eine zu hohe Härte beziehungsweise eine zu geringe Elastizität sind einer guten Erosionsbeständigkeit eher abträglich.

Eine Möglichkeit, die Erosionsbeständigkeit zu erhöhen, ist die Erhöhung der Schichtdicken von Beschichtungen. Dies ist aus Gewichtsgründen jedoch in vielen Anwendungen, beispielsweise im Flugzeugbau oder Rotorblattbau von Windenergieanlagen, nicht erstrebenswert.

Weiterhin können Harze mit aromatischen Harzbestandteilen wie beispielsweise Epoxidharze in den Beschichtungszusammensetzungen, auf denen die Beschichtungen basieren, eingesetzt werden. Aufgrund der aromatischen Molekülbestandteile weisen die resultierenden Beschichtungen eine hohe Verschleißfestigkeit auf, besitzen jedoch eine deutlich eingeschränkte UV-Beständigkeit.

Darüber hinaus können Beschichtungszusammensetzungen eingesetzt werden, die Harze enthalten, mit denen licht- oder temperaturinduziert hohe Vernetzungsdichten erzielt werden können. Beispielsweise können UV-Harze (über radikalische oder ionische Polymerisation) oder bestimmte hochreaktive Polyadditionsharze eingesetzt werden. Mit diesen Bindemittelklassen kann ebenfalls die Verschleißbeständigkeit verbessert werden, jedoch gibt es limitierende Faktoren bei der Verwendung auf Großbauteilen wie Rotorblättern oder Flugzeugbauteilen. So besteht bei Formulierungen aus beispielsweise UV-Harzen eine begrenzte Pigmentauswahl, da diese Absorptionsmaxima in Aushärtungswellenlängen aufweisen können und die Schichtdicken in Abhängigkeit von der Pigmentierungshöhe limitiert sind. Weiterhin ergeben sich anlagentechnische Herausforderungen der Sauerstoffinhibierung der UV-Initiatoren. Bei der Verwendung von temperaturinduzierten Lacken (das heißt insbesondere allgemein bekannten Einkomponenten-Lacken) besteht vor allem die Limitierung hinsichtlich der Einbrenntemperaturen im Bezug zur Anlagendimensionierung bei Großbauteilen.

Aus der internationalen Patentanmeldung WO 2010/122157 sind erosionsbeständige Polyurethanbeschichtungen bekannt, die unter Einsatz von aliphatischen Polyesterpolyolen und einer Isocyanatkomponente, beispielsweise Polylactonmodifizierten Isocyanat-Präpolymeren oder Uretdionverbindungen, hergestellt werden.

In der WO 2012/032113 A1 werden Zwei-Komponenten-Erosionsschutz-beschichtungszusammensetzungen auf Basis einer Polyolkomponente und einer mit Isocyanatgruppen terminierten Polylacton-Komponente offenbart, die zur Herstellung von Beschichtungen auf Rotorblättern eingesetzt werden können.

Auch wenn die so hergestellten Beschichtungen eine bereits verbesserte Erosionsbeständigkeit haben, ist insbesondere im Hinblick auf aktuelle Herausforderungen beispielsweise im Rotorblattbau von Windenergieanlagen, insbesondere bezüglich windreicher Standorte (Offshore) und hoher Blattgeschwindigkeiten im Betrieb, sowie im Flugzeugbau (Gewichtsverringerung bei gleicher oder besserer Performance) eine weitere Verbesserung wünschenswert.

Hinzu kommt, dass viele der gängigen Systeme des Stands der Technik als von organischen Lösemitteln freie Beschichtungszusammensetzungen formuliert sind, welche demnach eine grundsätzlich hohe Viskosität aufweisen und nicht beziehungsweise nicht zufriedenstellend über Spritzapplikationsverfahren auf ein Substrat aufgebracht werden können. Stattdessen werden regelmäßig Roll-, Streich- oder Walzapplikationsverfahren gewählt. Allerdings ist gerade durch die Spritzapplikation ein vergleichsweise einfaches und gut kontrollierbares Aufbringen von Beschichtungszusammensetzungen möglich. Hierzu muss die entsprechende Zusammensetzung allerdings bei den bei der Spritzapplikation herrschenden Bedingungen (hohe Scherbelastung) eine vergleichsweise niedrige Viskosität aufweisen, um über die entsprechenden Apparaturen angemessen zerstäubt beziehungsweise verspritzt werden zu können.

Zu beachten ist ferner, dass solche Erosionsschutz-Beschichtungszusammensetzungen, sofern sie angemessen über Spritztechniken appliziert werden können sollen, in der Regel vergleichsweise hohe Anteile von organischen Lösemitteln umfassen müssen. Denn nur so können sie eine Viskosität im notwendigen Bereich aufweisen. Ein entsprechend hoher Anteil organischer Lösemittel ist wiederum dem ökologischen Profil der Zusammensetzung abträglich. Solche Zusammensetzungen besitzen also einen zu hohen VOC (volatile organic content, das heißt Anteil organischer Lösemittel, angegeben als Menge organischer Lösemittel in Gramm pro Liter Zusammensetzung).

### Aufgabe

Der vorliegenden Erfindung lag daher die Aufgabe zugrunde, die zuvor beschriebenen Nachteile des Stands der Technik zu beseitigen. Es sollten Beschichtungszusammensetzungen zur Verfügung gestellt werden, die zur Herstellung von Erosionsschutzbeschichtungen eingesetzt werden können, die eine verbesserte Erosionsbeständigkeit aufweisen als Erosionsschutzbeschichtungen des Standes der Technik. Dabei sollten die Beschichtungszusammensetzungen einfach herstellbar und insbesondere auch bei großen Bauteilen wie Rotorblättern von Windenergieanlagen oder Flugzeugen einfach zu verwenden sein. Das heißt insbesondere, dass die Zusammensetzungen angemessen durch Spritzapplikation auf entsprechende Substrate aufzubringen sein sollten und ohne den Einsatz von UV-Initiatoren und/oder hohen Temperaturen zu Beschichtungen verarbeitbar sein sollten. Trotzdem sollten die Beschichtungszusammensetzungen ein annehmbares ökologisches Profil aufweisen, das heißt also insbesondere einen nicht zu hohen Anteil organischer Lösemittel enthalten.

### Lösung

Demgemäß wurde eine lösemittelbasierte Zweikomponenten-Beschichtungszusammensetzung gefunden, umfassend
(1) eine Stammlackkomponente umfassend
   (A) mindestens ein Polycarbonatdiol,
   (B) mindestens ein hydroxylgruppenhaltiges Acrylatharz, Polyesterharz und/oder Polyester-Acrylat-Harz mit einer Hydroxylzahl von 75 bis 500 mg KOH/g, und
   (C) mindestens einen mit mindestens einem Organosilan modifizierten Füllstoff sowie
(2) eine Härterkomponente umfassend
   (D) mindestens ein organisches Polyisocyanat,
   wobei die Beschichtungszusammensetzung bei einer Scherbelastung von 1000 1/s und einer Temperatur von 23°C eine Viskosität von 50 bis 2000 mPa·s besitzt und einen Anteil an organischen Lösemitteln von 100 bis 350 g/l aufweist.

Die neue Zweikomponenten-Beschichtungszusammensetzung ist Gegenstand der vorliegenden Erfindung und wird in der Folge auch als erfindungsgemäße Beschichtungszusammensetzung bezeichnet. Bevorzugte Ausführungsformen gehen aus der folgenden Beschreibung und den Unteransprüchen hervor.

Gegenstand der vorliegenden Erfindung ist auch ein Verfahren zur Herstellung von Beschichtungen unter Einsatz der erfindungsgemäßen Beschichtungszusammensetzung sowie eine Beschichtung, die aus der Beschichtungszusammensetzung hergestellt wurde. Gegenstand der Erfindung ist auch die Verwendung der Beschichtungszusammensetzung zur Verbesserung der Erosionsbeständigkeit.

Die erfindungsgemäße Beschichtungszusammensetzung lässt sich einfach zu Beschichtungen verarbeiten. Das heißt insbesondere, dass sie durch Spritzapplikation auf entsprechende Substrate aufgebracht werden kann und zudem ohne den Einsatz hoher Temperaturen gehärtet werden kann. Die hergestellten Beschichtungen weisen eine ausgezeichnete Erosionsbeständigkeit auf. Die Beschichtungszusammensetzung beziehungsweise die Beschichtungen eignen sich somit ideal für Substrate, die starken erodierende Einflüssen ausgesetzt sind, beispielsweise Rotorblättern oder Substraten im Flugzeugbau.

### Beschreibung der Erfindung

Die erfindungsgemäße Beschichtungszusammensetzung ist eine Zweikomponenten-Beschichtungszusammensetzung. Dies bedeutet bekanntermaßen, dass im Rahmen der vorliegenden Erfindung die wie unten beschriebene Komponente (1) (Stammlackkomponente) und die wie unten beschriebene Komponente (2) (Härterkomponente) getrennt voneinander hergestellt und gelagert werden und erst kurz vor der Applikation zusammengegeben werden. Die Verarbeitungszeit beziehungsweise Topfzeit (das heißt die Zeit, in der die erfindungsgemäße Beschichtungszusammensetzung bei Raumtemperatur (15 bis 25°C, insbesondere 20°C) verarbeitet werden kann, ohne dass beispielsweise durch entsprechende Vernetzungsreaktionen bei Raumtemperatur eine so starke Viskositätserhöhung auftritt, dass keine Applikation mehr möglich ist), ist bekanntermaßen abhängig von den eingesetzten Bestandteilen, insbesondere von den weiter unten beschriebenen Polycarbonatdiolen (A), Acrylatharzen, Polyesterharzen und/oder Polyester-AcrylatHarzen (B) und den Polyisocyanaten (D). Insbesondere beträgt die Verarbeitungszeit des Grundierungsmittels aber mindestens 0,1 min bis zu 10 min, bevorzugt mindestens 0,5 min bis zu 5 min. Der Vorteil eines solchen Zweikomponenten-Beschichtungszusammensetzung liegt vor allem darin, dass auch bei großen Bauteilen wie Rotorblättern von Windenergieanlagen oder Flugzeugen eine einfache Verarbeitung möglich ist, insbesondere keine hohen Temperaturen zur Härtung notwendig sind. Bevorzugt wird das erfindungsgemäße Beschichtungsmittel nach dem Aufbringen auf ein Substrat bei nicht mehr als 80°C, bevorzugt nicht mehr als 60°C, insbesondere bevorzugt bei 15 bis 60°C gehärtet.

Unter Härtung ist das dem Fachmann bekannte Vorgehen zu verstehen, das heißt die Überführung einer als Schicht auf ein Substrat aufgebrachten Beschichtungszusammensetzung in den gebrauchsfertigen Zustand, das heißt also in einen Zustand, in der das mit der jeweiligen Beschichtung ausgestattete Substrat transportiert, gelagert und bestimmungsgemäß verwendet werden kann. Diese Härtung erfolgt insbesondere durch chemische Reaktion von reaktiven funktionellen Gruppen der enthaltenen Komponenten, die als Bindemittelbestandteile in dem Beschichtungsmittel enthalten sind. Insbesondere zu nennen ist damit im Rahmen der vorliegenden Erfindung die Reaktion der Hydroxylgruppen des Polycarbonats (A) sowie der Hydroxylgruppen des Acrylatharzes, Polyesterharzes und/oder Polyester-Acrylat-Harzes (B) mit den Isocyanatgruppen des Polyisocyanats (D). Durch diese Vernetzungsreaktionen und die parallel erfolgende Evaporation von Lösemitteln wird ein Beschichtungsfilm gebildet, das heißt es wird eine gehärtete Beschichtungsschicht (gehärtete Beschichtung) hergestellt. Die Aktivierung der Reaktionen ist durch thermische Energie möglich, wobei im vorliegenden Fall aber der beschriebene Vorteil der nicht notwendigen hohen Temperaturen besteht. Unter dem Begriff Bindemittel beziehungsweise Bindemittelbestandteil wird hierin entsprechend der einschlägigen DIN EN ISO 4618 der nichtflüchtige Anteil eines Beschichtungsstoffs ohne Pigmente und Füllstoffe verstanden. Spezielle Bindemittelbestandteile sind in diesem Sinne somit neben den Komponenten (A) und (B) auch die Komponente (D) (die auch als Härter oder Vernetzungsmittel bezeichnet werden kann) oder auch lacktypische Additive sowie alle anderen nichtflüchtigen Bestandteile, außer den Pigmenten und Füllstoffen. Schon der Übersichtlichkeit halber wird der Begriff Bindemittel aber hauptsächlich in Bezug auf die vornehmlich für die Filmbildung verantwortlichen Komponenten der Stammlackkomponente (1) verwendet, das heißt insbesondere die Komponenten (A) und (B). Die Komponente (D) wird entsprechend vornehmlich als Härter oder auch Vernetzungsmittel bezeichnet.

Die Zweikomponenten-Beschichtungszusammensetzung enthält mindestens ein Polycarbonatdiol (A) in der Stammlackkomponente (1).

Polycarbonatdiole sind formal betrachtet Veresterungsprodukte, die durch Umsetzung von Kohlensäure mit Polyolen entstehen können. In der Praxis werden die Carbonatstrukturen bekanntermaßen mit Hilfe von Phosgen oder Kohlensäurediestern unter gängigen Reaktionsbedingungen eingeführt. Die Umsetzung mit Diolen, beispielsweise mit 3-Methyl-1,5-pentandiol oder 1,6-Hexandiol, führt dann zu den Polycarbonatdiolen. Selbstverständlich können solche Polycarbonatdiole neben den die Ausgangskomponenten verbindenden Carbonatfunktionen anteilig auch weitere funktionelle Gruppen wie Ester- oder Ethergruppen enthalten, je nach Art und Menge der eingesetzten Ausgangsverbindungen. Vorzugsweise handelt es sich bei dem Polycarbonatdiol um ein lineares Polycarbonatdiol. Bevorzugt sind die Hydroxylgruppen endständig, das heißt an beiden Enden des bevorzugt linearen Polycarbonatdiols angeordnet (hydroxyl-terminiertes Polycarbonatdiol). Ganz besonders bevorzugt handelt es sich um ein aliphatisches Polycarbonatdiol. Das Polycarbonatdiol enthält also bevorzugt keine aromatischen Gruppen, da diese eine deutlich eingeschränkte UV-Beständigkeit aufweisen.

Bevorzugt besitzen die Polycarbonatdiole (A), insbesondere die linearen, aliphatischen Polycarbonatdiole, eine Hydroxylzahl von 50 bis 500 mg KOH/g, bevorzugt 100 bis 400 mg KOH/g, insbesondere 150 bis 250 mg KOH/g (gemessen nach DIN 53240). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Da es sich bei den Polycarbonaten (A) um diolische Komponenten handelt, sind die OH-Zahl und das zahlenmittlere Molekulargewicht der Komponenten voneinander abhängig beziehungsweise die angegebene OH-Zahl lässt Rückschlüsse auf das zahlenmittlere Molekulargewicht zu. Ein hohes zahlenmittleres Molekulargewicht würde mit einer eher niedrigen OH-Zahl einhergehen. Das zahlenmittlere Molekulargewicht kann breit variieren und liegt im Bereich von beispielsweise 220 g/mol bis 2250 g/mol (gemessen mittels GPC-Analyse mit THF (+0,1 % Essigsäure) als Eluent (1 ml/min) auf einer Styrol-Divinylbenzol-Säulenkombination, Kalibrierung mit Polystyrol-Standards).

Geeignete Polycarbonatdiole (A) werden beispielsweise unter der Produktlinie DURANOL™ (Fa. Asahi Kasei), Desmophen® von der Firma Bayer MaterialScience AG (Leverkusen, Deutschland) oder Eternacoll® (UBE) angeboten.

Der Anteil der Polycarbonate (A) liegt vorzugsweise im Bereich von 5 bis 50 Gew.-%, bevorzugt 7,5 bis 40 Gew.-%, besonders bevorzugt 10 bis 30 Gew.-%, jeweils bezogen auf das Gesamtgewicht der erfindungsgemäßen Beschichtungszusammensetzung.

Die Zweikomponenten-Beschichtungszusammensetzung enthält in der Stammlackkomponente (1) mindestens ein hydroxylgruppenhaltiges Acrylatharz, Polyesterharz und/oder Polyester-Acrylat-Harz (B), welches eine Hydroxylzahl von 75 bis 500 mg KOH/g besitzt.

Unter Acrylatharzen, auch genannt Poly(meth)acrylatharze, werden bekanntermaßen polymere organische Verbindungen verstanden, die unterschiedliche Acrylat- und/oder Methacrylatmonomere enthalten, das heißt solche Monomere in ihrer reagierten Form enthalten. Die Bezeichnung (Meth)acrylat steht im Rahmen der vorliegenden Erfindung für Acrylate und/oder Methacrylate beziehungsweise solche Verbindungen, die Acrylate und/oder Methacrylate beinhalten beziehungsweise aus diesen aufgebaut sind.

Als Beispiele für solche Acrylat- und Methacrylatmonomere sind unterschiedliche Alkyl(meth)acrylate und Cycloalkyl(meth)acrylate zu nennen, wie beispielsweise die dem Fachmann bekannten Verbindungen Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate sowie Cyclopentylacrylat, Cyclopentylmethacrylat, Isobornylacrylat, Isobornylmethacrylat, Cyclohexylacrylat und Cyclohexylmethacrylat.

Wie oben genannt, sind die Acrylatharze (B) hydroxylgruppenhaltig. Dementsprechend sind in das Polymergerüst bevorzugt bestimmte Anteile solcher Acrylat- und Methacrylatmonomere eingebaut, die Hydroxylgruppen aufweisen und damit die OH-Funktionalität der Polyacrylatharze ausmachen. Als hydroxylgruppenhaltige Monomerbausteine zur Herstellung der Polyacrylatharze werden Hydroxyalkyl(meth)acrylate, wie beispielsweise 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat, eingesetzt.

Als weitere Monomerbausteine für die Acrylatharze können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in insbesondere Acryl- und/oder Methacrylsäure eingesetzt werden.

Die Herstellung solcher Acrylatharze (B) kann auf an sich bekannte Weise erfolgen, beispielsweise mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von beispielsweise 50 bis 200 °C.

Polyester oder Polyesterharze sind ebenfalls bekannt. Es handelt sich um polymere Harze, die durch Umsetzung mehrwertiger organischer Polyole und mehrwertiger organischer Carbonsäuren hergestellt werden. Die Polyole und Polycarbonsäuren werden dabei durch Veresterung, das heißt also durch Kondensationsreaktionen, miteinander verknüpft. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Als Diole seien beispielhaft Ethylenglykol, Propylenglykol, Butylenglykol, Butandiol-1,4, Hexandiol-1,6, Neopentylglykol und Dimethylolcyclohexan genannt. Als höherfunktionelle Polyole seien Trimethylolpropan, Glycerin und Pentaerythrit genannt. Als Dicarbonsäuren seien beispielhaft o-Phthalsäure, Isophthalsäure, Terephthalsäure, Tetrahydrophthalsäure, Hexahydrophthalsäure, Cyclohexandicarbonsäure, Bernsteinsäure, Adipinsäure, Azelainsäure, Sebacinsäure, Maleinsäure, Fumarsäure, Glutarsäure, Hexachlorheptandicarbonsäure, Tetrachlorphthalsäure und/oder dimerisierte Fettsäuren genannt.

Auch die Herstellung der Polyesterharze (B) kann auf an sich bekannte Weise erfolgen, beispielsweise mit Hilfe der auf dem Kunststoffgebiet üblichen und bekannten Methoden der Copolymerisation.

Polyester-Acrylat-Harze sind entsprechend Mischpolymere (Hybride) umfassend Strukturanteile beider der oben genannten Harztypen. Sie können durch an sich bekannte Herstellungsverfahren hergestellt werden, beispielsweise durch in ein und derselben Mischung stattfindende parallele Polymerisation entsprechender Monomere, Pfropfpolymerisation und ähnliche bekannte Verfahren.

Die Hydroxylzahl der Acrylatharze, Polyesterharze und/oder Polyester-Acrylat-Harze (B) ist von 75 bis 500 mg KOH/g, bevorzugt 100 bis 450 mg KOH/g, nochmals bevorzugt 175 bis 400 mg KOH/g und ganz besonders bevorzugt von 250 bis 350 mg KOH/g.

Entsprechende Acrylatharze, Polyesterharze und/oder Polyester-Acrylat-Harze (B) können im Handel erhalten werden, beispielsweise unter den Handelsbezeichnungen Worleecryl oder Synthalat.

Der Anteil der Acrylatharze, Polyesterharze und/oder Polyester-Acrylat-Harze (B) liegt vorzugsweise im Bereich von 1 bis 25 Gew.-%, bevorzugt 2 bis 20 Gew.-%, besonders bevorzugt 3 bis 15 Gew.-%, jeweils bezogen auf das Gesamtgewicht der erfindungsgemäßen Beschichtungszusammensetzung.

Die Zweikomponenten-Beschichtungszusammensetzung enthält mindestens einen mit mindestens einem Organosilan modifizierten Füllstoff (C) in der Stammlackkomponente (1).

Als zu modifizierende (das heißt noch nicht mit Organosilanen modifizierte) Füllstoffe kommen grundsätzlich alle die dem Fachmann im Zusammenhang mit Beschichtungszusammensetzungen bekannten Füllstoffe, insbesondere anorganische Füllstoffe, in Frage. Zu verstehen sind darunter unterschiedliche, beispielsweise in körniger oder in Pulverform eingesetzte Substanzen, die zum Erreichen bestimmter physikalischer Eigenschaften von Beschichtungszusammensetzungen verwendet werden und im jeweiligen Anwendungsmedium unlöslich sind. Hierzu gehören insbesondere anorganische Füllstoffe, nämlich Carbonate wie Calciumcarbonat, Dolomit oder Bariumcarbonat, Sulfate wie Calciumsulfat und Bariumsulfat sowie Silikate und gegebenenfalls Schichtsilikate wie Talkum, Pyrophyllit, Glimmer, Kaolin, Feldspat, gefällte Calcium-, Aluminium-, Calcium-/Aluminium-, Natrium-/Aluminium-Silikate, Mullit, Wollastonit, Nephelin wie Nephelin-Syenit und Siliciumdioxid wie Quarz und Cristobalit. Im Rahmen der vorliegenden Erfindung werden Siliciumdioxide der Gruppe der Silikate zugeordnet. Weitere anorganische Füllstoffe sind gefällte Kieselsäuren oder pyrogene Kieselsäuren sowie Metalloxide wie Aluminium- und Magnesiumhydroxid. Bevorzugte anorganische Füllstoffe sind Silikate.

Bei dem Füllstoff (C) handelt es sich um einen mit Organosilanen modifizierten Füllstoff. Der zu modifizierende Füllstoff dient also als Substrat, auf das die Organosilane aufgebracht werden. Eine solche Beschichtung von Füllstoffen kann unter grundsätzlich bekannten Bedingungen erfolgen, wobei in Abhängigkeit von den Reaktionsbedingungen und/oder Substrateigenschaften eine Physisorption und/oder Chemisorption der Organosilane stattfindet. Das Beschichtungs- beziehungsweise Modifizierungsverfahren kann beispielsweise in wässriger Lösung, gegebenenfalls in Anwesenheit von Katalysatoren wie Säuren oder Basen, über Hydrolyse und anschließende Kondensation erfolgen. Ein klassisches Beispiel ist die Hydrolyse entsprechend hydrolysierbarer Bindungen im Organosilan (beispielsweise -Si-OCH₃-Bindung) und die anschließende Kondensation mit Hydroxylgruppen auf der Füllstoffoberfläche, beispielsweise den Hydroxylgruppen einer Silikatoberfläche.

Organosilane sind dem Fachmann bekannt. Es handelt sich um von reinen Silanen (das heißt binären aus Si und H bestehenden Verbindungen) abgeleitete Komponenten (Derivate von reinen Silanen), in denen zumindest anteilig Wasserstoff durch einen organischen Rest substituiert ist und dieser Rest über ein Kohlenstoffatom mit dem Silicium verbunden ist. Im Rahmen der vorliegenden Erfindungen werden Verbindungen also dann als Organosilane bezeichnet, wenn sie zumindest eine Si-C-Bindung enthalten. Als organische Reste kommen beispielsweise reine Alkylreste oder auch Alkylreste, in denen zumindest ein Wasserstoffrest durch eine funktionelle Gruppe wie eine Epoxid- oder Aminogruppe substituiert ist, in Frage. Im Einklang mit gebräuchlichen Definitionen werden als Organosilane auch Verbindungen bezeichnet, in denen alle der im reinen Silan vorhandenen, an Si gebundene Wasserstoffreste durch andere Reste substituiert sind, solange zumindest eine Si-C-Bindung besteht. Gängige Reste, durch die Wasserstoffreste substituiert sind, sind neben den oben beschriebenen organischen Resten beispielsweise Hydroxylgruppen, Alkoxygruppen oder Halogene. Solche Organosilane können monomeren, oligomeren oder auch polymeren Charakter haben (zur Definition von oligomeren und polymeren Organosilanen siehe unten).

Bevorzugte, zur Modifizierung eingesetzte Organosilane können über die folgende allgemeine Formel (I) beschrieben werden:

X₄₋ₙ₋ₘSi-Rₙ(-A-B)ₘ (I)

wobei
X = OH, Halogen, Alkoxy, insbesondere Methoxy und Ethoxy, Aryloxy,
R = Alkyl, bevorzugt C₁ bis C₁₂-Alkyl, Phenyl oder H,
A = zweibindiger organischer Rest, insbesondere zweibindiger Alkylenrest, bevorzugt C₁ bis C₆-Alkylen, insbesondere C₁ bis C₃-Alkylen,
B = Amino-, Hydroxyl-, Epoxy-, Epoxypropyloxy, Hydroxyalkyl-, Acetoxy-, Isocyanat-, Acryloxy-, Methacryloxy-, Imidazol-, Ureido-,Vinylgruppe,
n, m = 0,1,2,3, mit n+m ≤ 3, bevorzugt 1 ≤ n+m ≤ 3.

Die bevorzugten Organosilane weisen also mindestens eine Gruppe X auf, welche bekanntermaßen in beispielsweise wässriger Lösung leicht hydrolysierbar sind und über eine anschließende Kondensation mit einer Füllstoffoberfläche, die Hydroxylgruppen aufweist, beispielsweise eine Silikatoberfläche, verknüpft werden können. Bevorzugt ist X eine Methoxy- oder Ethoxygruppe.

Durch entsprechende Wahl der Substituenten kann also eine individuell angepasste Modifizierung der Füllstoffoberfläche erfolgen. In jedem Fall wird die Oberfläche der anorganischen Füllstoffe durch die Anlagerung der Organosilane hydrophobisiert. Auf diese Weise wird ermöglicht, dass sich die Füllstoffkomponenten, die ohne die Modifizierung eine durch den anorganischen Charakter vorgegebene Polarität aufweisen, mit der Modifizierung aber hydrophober sind, durch entsprechende physikalische Adsorption und gegebenenfalls chemische Reaktion angemessen in die organische, hydrophobe Polymermatrix des Beschichtungssystems einbinden können, da sie insbesondere eine entsprechend verbesserte Verträglichkeit mit den Polymeren aufweisen. Hierdurch wird insbesondere eine herausragende Effektivität der Füllstoffkomponenten gewährleistet. Das heißt die Funktion der Füllstoffe, die mechanische Beständigkeit von Beschichtungen zu verbessern, wird sehr gut erfüllt.

Dabei kann eine ausschließliche Modifizierung mit Silanen, die Alkylgruppen tragen, erfolgen (m = 0) oder eine Modifizierung mit funktionellen Gruppen wie beispielsweise Epoxid- oder Aminogruppen erfolgen (m > 0). Es können auch Gemische verschiedener Silane eingesetzt werden, beispielsweise solche mit lediglich Alkylgruppenfunktionalität (m = 0) und solche, die zumindest anteilig funktionelle Gruppen wie Aminogruppen enthalten (m > 0).

Möglich zur Modifizierung ist neben dem Einsatz oder anstelle des Einsatzes der Organosilane der Formel (I) auch der Einsatz von anderen Organosilanen, beispielsweise höhermolekularen Organosilanen. Solche Organosilane können auch als oligomere oder polymere Organosilane bezeichnet werden, in denen beispielsweise mehrere der oben genannten Organosilane der Formel (I) über die enthaltenen hydrolysierbaren Gruppen miteinander kondensiert vorliegen und erst dann über noch vorhandene weitere hydrolysierbare Gruppen auf die Oberfläche der Füllstoffe aufgebracht werden. Eine wie beschriebene Kondensierung von monomeren Silanen untereinander kann im Übrigen selbstverständlich schon aus rein statistischen Gründen auch während des Verfahrens zur Modifizierung von Füllstoffen mit den Organosilanen der Formel (I) auftreten. Das heißt, es werden beispielsweise Organosilane der Formel (I) eingesetzt, wobei diese dann nicht nur in ihrer monomeren Ausgangsform, sondern auch nach einer Kondensierung untereinander in oligomerer oder polymerer Form auf der Füllstoffoberfläche anknüpfen können. Im Rahmen der vorliegenden Erfindung wird ein Organosilan als oligomer bezeichnet, wenn es im Mittel aus zwei bis fünf gleichen oder verschiedenen monomeren Organosilaneinheiten (das heißt solchen, die nur ein Siliciumatom enthalten), aufgebaut ist. Ein polymeres Organosilan weißt entsprechend mehr als 5 Einheiten auf.

Beispielhaft seien die folgende Organosilane genannt. Propyltrimethoxysilan, Propyltriethoxysilan, Isobutyltrimethoxysilan, n-Octyltrimethoxysilan, i-Octyltrimethoxysilan, n- Octyltriethoxysilan, n-Decyltrimethoxysilan, Dodecyltrimethoxysilan, Hexadecyltrimethoxysilan, Vinyltrimethoxysilan, 3-Aminopropyltrimethoxysilan, 3- Methacryloxytrimethoxysilan, 3-Glycidyloxypropyltrimethoxysilan, beta- (3, 4- Epoxycyclohexyl)-ethyltrimethoxysilan, gamma-Isocyanatopropyltri- methoxysilan, 1,3-bis (3-glycidoxypropyl)-1, 1,3, 3,-tetramethyldisiloxan, Ureidopropyltriethoxysilan sowie deren homogene und heterogene Oligomere und Polymere. Solche Silane sind beispielsweise unter den Handelsnamen Dynasylan oder Geniosil erhältlich.

Bevorzugt werden im Rahmen der vorliegenden Erfindung Silane eingesetzt, die Epoxid- oder Aminogruppen enthalten, insbesondere Epoxid- oder Aminogruppen-haltige organische Reste, die über ein Kohlenstoffatom an Silicium gebunden sind. Über diese Epoxid- oder Aminogruppen kann einerseits nochmals das Polaritätsprofil der Füllstoffe genauer angepasst werden, um die oben beschriebene physikalische Adsorption noch effektiver zu gestalten. Zudem können die Füllstoffe (C) bei der Härtung der Beschichtungszusammensetzungen mit beispielsweise den funktionellen Gruppen der hydroxylgruppenhaltigen Komponenten (A) und (B) und/oder der Polyisocyanate (D) umgesetzt werden und damit nochmals besser in das sich bildende Netzwerk eingebunden werden. Neben dem tragenden Effekt der schon oben beschriebenen physikalischen Adsorption, erfolgt gegebenenfalls also zusätzlich noch eine chemische Einbindung in die Matrix.

Die Teilchengröße der modifizierten Füllstoffe (C) ist an sich kein kritischer Parameter und liegt beispielsweise in den für Füllstoffe gängigen Bereichen von einigen Mikrometern (insbesondere mittlere Teilchengröße (dso-Wert) 0,1 bis 100 µm, bevorzugt 1 bis 50 µm, gemessen mittels Laserbeugung gemäß ISO 13320:2009). Die Menge der Organosilanbeschichtungen solcher Füllstoffe beträgt beispielsweise zwischen 0,2 und 5 Gew.-%, bezogen auf das Gesamtgewicht des modifizierten Füllstoffs.

Solche Füllstoffe (C) können im Handel erhalten werden, beispielsweise unter den Handelsbezeichnungen Tremin, Treminex, Tremica oder Silbond der Firma HPF - The Mineral Engineers.

Der Anteil der Füllstoffe (C) liegt vorzugsweise im Bereich von 10 bis 50 Gew.-%, bevorzugt 15 bis 40 Gew.-%, besonders bevorzugt 20 bis 30 Gew.-%, jeweils bezogen auf das Gesamtgewicht der erfindungsgemäßen Beschichtungszusammensetzung.

Die Zweikomponenten-Beschichtungszusammensetzung enthält in der Härterkomponente (2) mindestens ein organisches Polyisocyanat (D).

Organische Polyisocyanate sind dem Fachmann bekannt. Es handelt sich um aliphatische und aromatische Komponenten, die im Mittel mehr als eine Isocyanatgruppe pro Molekül enthalten. Es können die an sich bekannten Polyisocyanate wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat (IPDI), 2-lsocyanatopropylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, deren Dimere und Trimere, sowie Mischungen aus diesen Polyisocyanaten verwiesen. Ebenfalls eingesetzt werden können die bekannten Polyester- oder Polyether-modifizierten Polyisocyanate, das heißt also Polyisocyanate, die durch anteilige Umsetzung von beispielsweise hydroxyfunktionellen Polyestern wie Polylactonpolymeren oder hydroxyfunktionellen Polyethern mit den genannten Diisocyanaten und/oder deren Dimeren und/oder Trimeren erhalten werden können.

Bevorzugt werden die an sich bekannten Dimere und/oder Trimeren der genannten Diisocyanate eingesetzt, das heißt also insbesondere die an sich bekannten und auch im Handel erhältlichen Uretdione und Isocyanurate der oben genannten Diisocyanate.

Insbesondere bevorzugt werden aliphatische Polyisocyanate eingesetzt. Ganz besonders bevorzugte Polyisocyanate sind Hexamethylendiisocyanat und Isophorondiisocyanat sowie Mischungen hiervon, sowie deren unterschiedliche Trimere und Dimere wie Isocyanurate und Uretdione. Nochmals bevorzugt ist das Isocyanurat von Hexamethylendiisocyanat.

Die Isocyanatgruppen in diesen Komponenten (D) können frei oder durch bekannte Blockierungsmittel blockiert sein. Bevorzugt sind die Isocyanatgruppen unblockiert (also frei). Die Beschichtungszusammensetzung enthält also bevorzugt ausschließlich Polyisocyanatgruppen enthaltene Komponenten, welche unblockiert sind, wobei diese bevorzugt ausschließlich in der Härterkomponente eingesetzt werden.

Dem Fachmann ist klar, dass bei der Herstellung entsprechender Polyisocyanate, insbesondere bei der Herstellung der beschriebenen Dimere und Trimere, rein synthesebedingt die hergestellte Komponente nicht nur die Dimere und Trimere enthält, sondern gegebenenfalls noch anteilig Restmonomere und/oder auch anteilig höhermolekulare Addukte, die beispielsweise durch Vernetzung zweier Isocyanurat-Ringe entstehen können. Trotzdem werden solche Komponenten, die sich letztlich als Gemisch unterschiedlicher Moleküle mit selbstverständlich deutlich überwiegendem Anteil an Dimeren oder Trimeren darstellen, schon aus Gründen der Übersichtlichkeit als Dimere und Trimere bezeichnet.

Die beschriebenen synthesebedingten Umstände werden beispielsweise durch den Isocyanatgehalt einer Polyisocyanat-Komponente berücksichtigt. Während beispielsweise das Isocyanurat von Hexamethylendiisocyanat theoretisch einen Isocyanatgehalt von 25 % besitzt, weisen manche als Hexamethylendiisocyanat-Trimere ausgewiesene Handelsprodukte einen Isocyanatgehalt von 23 % auf. Der reale Isocyanatgehalt ist also geringfügig kleiner als der theoretische Gehalt, was auf eine geringfügige Bildung höhermolekularer Addukte schließen lässt.

Das Polyisocyanat (D) besitzt beispielsweise einen Isocyanatgehalt von 10 bis 25 %, bevorzugt von 16 bis 24 %, insbesondere bevorzugt von 20 bis 23,5 %. Der Isocyanatgehalt wird im Rahmen der vorliegenden Erfindung gemäß DIN EN ISO 11909 durch Umsetzung der jeweiligen Probe mit überschüssigem Dibutylamin und Rücktitration des Überschusses mit Salzsäure gegen Bromphenolblau bestimmt.

Die genannten Polyisocyanate sind im Handel erhältlich. Bevorzugt ist selbstverständlich, dass alle in der Beschichtungszusammensetzung eingesetzten Polyisocyanate ausschließlich in der Härterkomponente (2) vorhanden sind.

Der Anteil des mindestens einen Polyisocyanats (D) liegt vorzugsweise im Bereich von 5 bis 40 Gew.-%, bevorzugt 10 bis 30 Gew.-%, besonders bevorzugt 15 bis 25 Gew.-%, jeweils bezogen auf das Gesamtgewicht der erfindungsgemäßen Beschichtungszusammensetzung.

Als weitere Bestandteile kann die erfindungsgemäße Beschichtungszusammensetzung unterschiedlichste dem Fachmann auf dem Gebiet bekannte Lackkomponenten enthalten.

Bevorzugt ist allerdings, dass die Komponenten (A), (B), (C) und (D) insgesamt einen Anteil von mindestens 40 Gew.-%, insbesondere bevorzugt mindestens 50 Gew-%, bezogen auf das Gesamtgewicht der Beschichtungszusammensetzung, ausmachen.

Die erfindungsgemäße Beschichtungszusammensetzung kann ein Molekularsieb oder mehrere Molekularsiebe enthalten. Molekularsieb ist die Bezeichnung für natürliche oder synthetische Zeolithe. Sie weisen bekanntermaßen eine vergleichsweise hohe innere Oberfläche (ca. 600 bis 700 m²/g) und einheitliche Porendurchmesser auf. Dadurch ergibt sich ein relativ starkes Adsorptionsvermögen. Geeignete Molekularsiebe weisen eine Porengröße von 2 bis 10, vorzugsweise 3 bis 4 Angström auf. Beispielsweise können hochporöse Aluminiumsilicate mit einer Porengröße von 3 Angström eingesetzt werden. Der Anteil der Molekularsiebe kann beispielsweise im Bereich von 1 bis 20 Gew.-%, bevorzugt 2 bis 15 Gew.-%, besonders bevorzugt 3 bis 10 Gew.-%, jeweils bezogen auf das Gesamtgewicht der erfindungsgemäßen Beschichtungszusammensetzung, liegen.

Die erfindungsgemäße Beschichtungszusammensetzung kann auch Katalysatoren für die Katalyse der Reaktion von Hydroxylgruppen mit Isocyanatgruppen enthalten. Vorzugsweise enthält die Beschichtungszusammensetzung 0,01 bis 1 Gew.-%, bezogen auf das Gesamtgewicht der Zusammensetzung, mindestens eines Katalysators. Geeignete Katalysatoren sind die bekannten Metallkatalysatoren wie beispielsweise Zinn-, Molybdän-, Zirkon oder Zinkkatalysatoren sowie aminische Katalysatoren wie zum Beispiel 2-(2-Dimethylamino-ethoxy)ethanol. Besonders geeignete Katalysatoren sind Zinnverbindungen wie Dimethylzinndilaurat oder Dibutylzinndilaurat, die, wie alle vorgenannten Katalysatoren, eine Reaktion zwischen den Polyisocyanaten (D) und den hydroxylgruppenhaltigen Komponenten (A) und (B) katalysieren.

Schließlich können die erfindungsgemäßen Beschichtungsmittelzusammensetzungen auch noch weitere von den bereits beschriebenen Komponenten verschiedene Bestandteile enthalten. Diese Bestandteile umfassen hierbei beispielsweise typische Lackadditive wie Antioxidantien, Entlüftungsmittel, Netzmittel, Dispergiermittel, Verlaufmittel und Entschäumer, beispielsweise solche auf Polysiloxanbasis, Haftvermittler, beispielsweise solche auf Silanbasis, Rheologiehilfsmittel wie Verdickungsmittel, Antiablaufmittel und Thixotropiermittel, Wachse und wachsartige Verbindungen, Biozide, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, aber auch lösliche Farbstoffe, Pigmente sowie weitere Füllstoffe oder Katalysatoren. Der Anteil solcher Bestandteile liegt in den hierfür gängigen Bereichen von beispielsweise 0,1 bis 30 Gew.-%, bezogen auf die Gesamtmenge der Beschichtungszusammensetzung. Insbesondere kann die Beschichtungsmittelzusammensetzung Pigmente wie beispielsweise Weißpigmente, Schwarzpigmente und/oder Buntpigmente wie Rotpigmente enthalten. Typische Gesamtmengen solcher Pigmente liegen von beispielsweise 10 bis 30 Gew.-%, bezogen auf die Gesamtmenge der Beschichtungszusammensetzung.

Die Beschichtungszusammensetzung ist lösemittelbasiert, enthält also jedenfalls mindestens ein organisches Lösemittel.

Der hierin verwendete Begriff des "organischen Lösemittels" entspricht dem der Richtlinie 1999/13/EG des Rates vom 11. März 1999 (veröffentlicht im Amtsblatt der Europäischen Gemeinschaften am 29. März 1999). Demnach ist ein "organisches Lösemittel" eine "flüchtige organische Verbindung", die, ohne sich chemisch zu verändern, allein oder in Kombination mit anderen Stoffen Rohstoffe, Produkte oder Abfallstoffe auflöst oder als Reinigungsmittel zur Auflösung von Verschmutzungen, als Lösemittel, als Dispersionsmittel oder als Mittel zur Einstellung der Viskosität oder der Oberflächenspannung oder als Weichmacher oder Konservierungsmittel verwendet wird. Als "flüchtige organische Verbindung" definiert die vorgenannte Richtlinie eine "organische Verbindung", die bei 293,15 K einen Dampfdruck von 0,01 kPa oder mehr hat oder unter den jeweiligen Verwendungsbedingungen eine entsprechende Flüchtigkeit aufweist. Eine "organische Verbindung" wiederum ist eine Verbindung, die mindestens Kohlenstoff und eines der Elemente Wasserstoff, Halogene, Sauerstoff, Schwefel, Phosphor, Silizium oder Stickstoff oder mehrere davon enthält, ausgenommen Kohlenstoffoxide sowie anorganische Karbonate und Bikarbonate.

Beispielhaft seien die folgenden organischen Lösemittel genannt: Aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglykolacetat, 3-Methoxy-n-butylacetat, Pentylacetat, Methoxypropylacetat oder Ethylethoxypropionat, Ether wie Dipropylenglykolmethylether, Alkohole oder Chlorkohlenwasserstoffe.

Die Menge an organischen Lösemitteln ist aber so gewählt, dass die erfindungsgemäße Beschichtungszusammensetzung einen Anteil an organischen Lösemitteln von 100 bis 350 g/l, bevorzugt 150 bis 325 g/l, insbesondere bevorzugt 200 bis 300 g/l, aufweist.

Der Anteil organischer Lösemittel kann also einfach durch Berücksichtigung der Masse organischer Lösemittel und dem Volumen der Beschichtungszusammensetzung eingestellt beziehungsweise bestimmt werden.

Als organische Lösemittel werden beispielsweise die üblichen Lacklösemittel eingesetzt. Sie verhalten sich chemisch im Wesentlichen inert gegenüber den weiteren Bestandteilen einer Beschichtungszusammensetzung und gehören zum flüchtigen Anteil der Zusammensetzung. Als organische Lösemittel besonders geeignet sind aprotische Lösemittel. Ganz besonders geeignet sind Ester, insbesondere Ester der Essigsäure wie beispielsweise, C₁₋₄-Alkylester der Essigsäure oder C₁₋₄-Alkoxyalkylester der Essigsäure. Beispiele ganz besonders geeigneter Ester als Lösemittel sind Butylacetat, 1- und 2-Methoxypropylacetat, Butylglykolacetat und 3-Methoxy-n-butylacetat. Weitere ganz besonders geeignete organische Lösemittel sind Ketone wie beispielsweise Methylisobutylketon oder Diketone wie Acetylaceton. Des Weiteren kann die erfindungsgemäße Beschichtungsmittelzusammensetzung auch Kohlenwasserstoffe als Lösemittel enthalten wie beispielsweise aromatische Kohlenwasserstoffe wie Shellsol A oder Alkylbenzole wie Xylol und Toluol.

Die Dichte der erfindungsgemäßen Beschichtungszusammensetzung liegt beispielsweise im Bereich von 1100 bis 1700 g/l, bevorzugt 1200 bis 1650 g/l, nochmals bevorzugt von 1300 bis 1600 g/l.

Bevorzugt enthält die Beschichtungszusammensetzung kein Wasser beziehungsweise nur untergeordnete Mengen an Wasser (wasserfrei). Insbesondere bevorzugt ist weniger als 1,0 Gew.-%, bevorzugt weniger als 0,2 Gew.-%, nochmals bevorzugt weniger als 0,01 Gew.-% Wasser, bezogen auf das Gesamtgewicht der Beschichtungszusammensetzung, enthalten. Es wird also bevorzugt lediglich, wenn überhaupt, durch den Einsatz von beispielsweise typischen Lackadditiven in der Zusammensetzung eingesetzt oder kann als geringfügige Verunreinigung enthalten sein.

Der Festkörpergehalt der Beschichtungszusammensetzungen kann je nach den Erfordernissen des Einzelfalls variieren, wobei er selbstverständlich abhängig vom Anteil organischer Lösemittel in der Zusammensetzung ist. Vorzugsweise liegt der Festkörpergehalt der erfindungsgemäßen Beschichtungszusammensetzung demzufolge bei 70 bis 95 %, besonders bevorzugt bei 75 % bis 92,5 % und ganz besonders bevorzugt bei 80 bis 90 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird die Zusammensetzung für 60 Minuten bei 130°C eingedampft.

Diese Prüfmethode kann, sofern nicht anders angegeben, ebenfalls angewandt werden, um beispielsweise den Anteil verschiedener Komponenten beziehungsweise Bestandteile der Beschichtungszusammensetzung, beispielsweise eines Polycarbonatdiols (A) oder eines Acrylatharzes, Polyesterharzes und/oder Polyester-Acrylat-Harzes (B), am Gesamtgewicht der Zusammensetzung festzulegen beziehungsweise vorzubestimmen. Es kann also der Festkörper einer Dispersion einer Komponente, welche der Zusammensetzung zugegeben werden soll, bestimmt werden. Durch Berücksichtigung des Festkörpers der Dispersion und der in der Zusammensetzung eingesetzten Menge der Dispersion kann dann der Anteil der Komponente an der Gesamtkomposition ermittelt beziehungsweise festgelegt werden. Diese Bestimmungsmethode kann natürlich auch erfolgen, wenn beispielsweise ein Bestandteil kommerziell erworben wird und vom Vertreiber als lösemittel- oder wasserfrei bezeichnet wird. In diesem Fall wird der Festkörper des einzusetzenden Handelsprodukts beispielsweise annähernd 100 % betragen.

Die erfindungsgemäße Beschichtungszusammensetzung weist bei einer Scherbelastung von 1000 1/s und einer Temperatur von 23°C eine Viskosität von 50 bis 2000 mPa·s auf. Bevorzugte Bereiche liegen von 75 bis 1800 mPa·s, insbesondere bevorzugt von 200 bis 1000 mPa·s (Messung mittels Rotations-Viskosimeter, vergleiche auch DIN 53019).

Demnach besitzt die erfindungsgemäße Beschichtungszusammensetzung bei der angegebenen hohen Scherbelastung eine vergleichsweise niedrige Viskosität. Demzufolge lässt sich die Zusammensetzung also sehr gut über die Spritzapplikation auf ein Substrat applizieren, denn bekanntermaßen ist eine Zusammensetzung bei der Spritzapplikation beim Verlassen der Applikationsdüse einer hohen Scherbelastung ausgesetzt. Auf diese Weise gelingt es, durch die Spritzapplikation auf dem Substrat einen vollständigen, gleichmäßigen Beschichtungsfilm auszubilden.

Die erfindungsgemäße Beschichtungszusammensetzung weist bevorzugt bei einer Scherbelastung von 1 1/s und einer Temperatur von 23°C eine Viskosität von 1000 bis 10000 mPa·s, wobei diese Viskosität bei einer Scherbelastung von 1 1/s (23°C) einer jeweils betrachteten Beschichtungszusammensetzung um einen Faktor von 4 bis 20 höher ist als die Viskosität dieser Zusammensetzung bei einer Scherbelastung von 1000 1/s (23°C) (Messung der Viskosität mittels Rotations-Viskosimeter, vergleiche auch DIN 53019). Bevorzugte Bereiche der Viskosität beziehungsweise des entsprechenden Faktors sind wie folgt: 1500 bis 7500 mPa·s, Faktor von 5 bis 15, nochmals bevorzugt 2500 bis 5000 mPa·s, Faktor von 6 bis 10.

Daraus folgt, dass die erfindungsgemäße Beschichtungszusammensetzung bevorzugt eine ausgeprägte Strukturviskosität aufweist. Dies bedeutet, dass die Zusammensetzung beim Applikationsvorgang bei der dann gegebenen hohen Scherung eine so niedrige Viskosität hat, dass es vernünftig zerstäubt werden kann (siehe oben), anderseits nach der Applikation auf ein Substrat und dann gegebener niedriger Scherung eine so hohe Viskosität aufweist, dass es ausreichend standfest ist und nicht vom Substrat läuft beziehungsweise Läufer ausbildet.

In einer bevorzugten Ausführungsform umfasst die erfindungsgemäße Beschichtungszusammensetzung
(1) in der Stammlackkomponente
   (A) 5 bis 50 Gew.-% mindestens eines Polycarbonatdiols,
   (B) 1 bis 25 Gew.-% mindestens eines hydroxylgruppenhaltigen Acrylatharzes, Polyesterharzes und/oder Polyester-Acrylat-Harzes mit einer Hydroxylzahl von 75 bis 500 mg KOH/g
   (C) 10 bis 50 Gew.-% mindestens eines mit mindestens einem Organosilan modifizierten Füllstoffs
   sowie
(2) in der Härterkomponente
   (D) 10 bis 50 Gew.-% mindestens eines organischen Polyisocyanats,
   wobei die Gewichtsangaben jeweils auf das Gesamtgewicht der Beschichtungszusammensetzung bezogen sind, die Komponenten (A), (B), (C) und (D) insgesamt einen Anteil von mindestens 40 Gew.-%, bezogen auf das Gesamtgewicht der Beschichtungszusammensetzung, ausmachen, und wobei die Beschichtungszusammensetzung bei einer Scherbelastung von 1000 1/s und einer Temperatur von 23°C eine Viskosität von 50 bis 2000 mPa·s besitzt und einen Anteil an organischen Lösemitteln von 100 bis 350 g/l aufweist.

Innerhalb dieser bevorzugten Ausführungsform sind selbstverständlich alle weiter oben beschriebenen vorteilhaften Varianten, beispielsweise hinsichtlich der Komponenten (A) bis (D), ebenfalls als vorteilhaft anzusehen. Dies gilt für die Kombination der bevorzugten Ausführungsform mit nur einer oder auch mehreren der oben beschriebenen vorteilhaften Varianten.

Bevorzugt ist, dass das Verhältnis der molaren Gesamtmenge von Hydroxylgruppen in der Stammlackkomponente zu der molaren Menge an Isocyanatgruppen in der Härterkomponente von 1,0/0,9 bis 1,0/1,5 liegt. Besonders bevorzugt ist demnach, dass das Verhältnis der molaren Gesamtmenge von Hydroxylgruppen der Komponenten (A) und (B) in der Stammlackkomponente zu der molaren Menge an Isocyanatgruppen in der Härterkomponente den genannten Wert einnimmt.

Bevorzugt ist, dass von den genannten Bestandteilen (A), (B), (C) und (D) jeweils genau ein Bestandteil in der Beschichtungszusammensetzung enthalten ist.

Alle angegebenen bevorzugten Ausführungsformen sind für sich genommen und in Kombination mit allen weiteren bevorzugten Ausgestaltungen als bevorzugt anzusehen. Die bevorzugten Ausführungsformen gelten nicht nur für die erfindungsgemäße Beschichtungszusammensetzung, sondern auch für die in der Folge beschriebenen Gegenstände, beispielsweise ein Verfahren, in dem die Beschichtungszusammensetzung eingesetzt wird.

Im Falle einer möglichen Spezifizierung auf Beschichtungszusammensetzungen enthaltend bevorzugte Komponenten, beispielsweise bevorzugte Polycarbonatdiole (A), in einem speziellen Anteilsbereich gilt folgendes. Die Polycarbonatdiole (A), die nicht in die bevorzugte Gruppe fallen, können selbstverständlich weiterhin in der Beschichtungszusammensetzung enthalten sein. Der spezielle Anteilsbereich gilt dann nur für die bevorzugte Gruppe von Polycarbonatdiolen. Bevorzugt ist allerdings, dass für den Gesamtanteil von Polycarbonatdiolen bestehend aus Polycarbonatdiolen aus der bevorzugten Gruppe und Polycarbonatdiolen (A), die nicht in die bevorzugte Gruppe fallen, ebenfalls der spezielle Anteilsbereich gilt.
Würde also eine Beschränkung auf einen Anteilsbereich von 10 bis 30 Gew.-% und eine bevorzugte Gruppe von Polycarbonatdiolen durchgeführt werden, so gilt dieser Anteilsbereich augenscheinlich zunächst nur für die bevorzugte Gruppe an Polycarbonatdiolen. Bevorzugt wäre dann aber, dass insgesamt von allen ursprünglich umfassten Polycarbonatdiolen (A) bestehend aus Polycarbonatdiolen aus der bevorzugten Gruppe und Polycarbonatdiolen (A), die nicht in die bevorzugte Gruppe fallen, ebenfalls von 10 bis 30 Gew.-% enthalten sind. Werden also 20 Gew.-% von Polycarbonatdiolen der bevorzugten Gruppe eingesetzt, so können höchstens 10 Gew.-% der Polycarbonatdiole (A) der nicht bevorzugten Gruppe eingesetzt werden.

Das genannte Prinzip gilt im Rahmen der vorliegenden Erfindung für alle genannten Komponenten der Beschichtungszusammensetzung und deren Anteilsbereiche.

Die vorliegende Erfindung betrifft auch ein Verfahren zur Herstellung der erfindungsgemäßen Beschichtungszusammensetzung. Die Herstellung kann unter Einsatz der üblichen und bekannten Mischverfahren und Mischaggregate wie Rührkesseln, Rührwerksmühlen, Extrudern oder Knetern erfolgen. Dabei ist zu beachten, dass es sich bei der erfindungsgemäßen Beschichtungszusammensetzung um eine Zweikomponenten-Zusammensetzung handelt und die Stammlackkomponente sowie die Härterkomponente getrennt voneinander hergestellt und gelagert werden und dann, wie oben beschrieben, erst kurz vor der Applikation der Beschichtungszusammensetzung zusammengegeben und gemischt werden. Die Stammlackkomponente umfasst dabei in der Regel neben den erfindungswesentlichen Bestandteilen (A), (B) und (C) die gegebenenfalls vorhandenen Zusatzstoffe beziehungsweise Lackadditive. Dieser Stammlackkomponente wird dann die Härterkomponente, welche den erfindungswesentlichen Bestandteil (D) enthält, kurz vor der Applikation der Beschichtungszusammensetzung auf ein Substrat beigemischt.

Ein weiterer Gegenstand der vorliegenden Erfindung betrifft eine aus der erfindungsgemäßen Beschichtungszusammensetzung hergestellte Beschichtung sowie ein Verfahren zur Herstellung solcher Beschichtungen.

Das Verfahren zur Herstellung einer Beschichtung umfasst die Applikation der Beschichtungszusammensetzung auf ein Substrat. Die Applikation kann über die üblichen Verfahren wie Spritzen, Walzen, Rollen, Streichen, Gießen oder über eine Kartusche erfolgen. Bevorzugt ist aber die Applikation über Spritzapplikationsmethoden wie Druckluftspritzen, Airless-Spritzen, Hochrotationglockenapplikation, Airmix-Verfahren, elektrostatischem Sprühauftrag (ESTA), gegebenenfalls verbunden mit Heissspritzapplikation wie zum Beispiel Hot-Air-Heissspritzen, oder auch Induktionsvermischung. Denn wie bereits Eingangs beschrieben hat die erfindungsgemäße Beschichtungszusammensetzung den Vorteil, dass sie nicht zuletzt aufgrund ihrer speziellen rheologischen Eigenschaften, insbesondere einer niedrigen Viskosität bei hoher Scherbelastung, besonders gut über Spritzapplikationsmethoden aufgebracht werden kann.

Um eine gehärtete Beschichtung herzustellen, wird die aufgebrachte Beschichtungszusammensetzung nach der Applikation gehärtet. Vorzugsweise erfolgt die Härtung thermisch. Die applizierte Beschichtungszusammensetzung beziehungsweise die Beschichtung bestehend aus der Zusammensetzung wird dabei bevorzugt Temperaturen von nicht mehr als 80°C, bevorzugt nicht mehr als 60°C ausgesetzt. Besonders bevorzugt ist ein Temperaturbereich von 15 bis 60 °C, ganz besonders von 15 bis 50 °C.

Die Zeitdauer, die für eine vollständige Härtung benötigt wird, kann je nach gewählter Härtungstemperatur stark variieren und liegt beispielsweise im Bereich von 30 min bis 10 Tagen. Beispielsweise kann für eine Dauer von 30 min bei 40°C bis 60°C gehärtet werden oder aber bei nur 15 bis 25°C für eine Dauer von 7 Tagen gehärtet werden.

Bei oder vor der Härtung können auch übliche thermische Härtungsvorrichtungen und/oder Konventionsverfahren angewandt werden, beispielsweise Durchlauföfen, NIR- und IR- Heizstrahler, Gebläse und Blastunnel. Diese Vorrichtungen können auch miteinander kombiniert werden. Dabei kann eine durch die Temperatur gesteuerte Härtung durch Konvektion unterstützt werden.

Die Beschichtungen können jeweils eine Trockenfilmschichtdicke von beispielsweise 100 bis 500 µm, vorzugsweise von 150 bis 400 µm aufweisen.

Die erfindungsgemäßen Beschichtungen können auf an sich beliebigen Substraten durch Applikation einer erfindungsgemäßen Beschichtungszusammensetzung auf das Substrat hergestellt werden. Die Substrate können aus den unterschiedlichsten Materialien und Kombinationen von Materialien aufgebaut sein. Vorzugsweise bestehen sie aus Metallen wie Stahl oder Aluminium sowie Kunststoffen wie epoxidharzbasierten Kunststoffen, die glasfaser- (GFK), aramidfaser- (AFK) und/oder kohlefaserverstärkt (CFK) oder beispielsweise mit Hanf oder Sisal naturfaserverstärkt sein können und/oder Glas. Bevorzugte Substrate sind glasfaserverstärkte Epoxidharz-Kunststoffe. Die Substrate können beliebige Größen und Formen aufweisen.

Von Vorteil ist aber, dass gerade sehr große Substrate wie beispielsweise Rotorblätter ohne besondere verfahrenstechnische Schwierigkeiten beschichtet werden können. Denn die erfindungsgemäße Beschichtungszusammensetzung kann über Spritzapplikationsverfahren appliziert und zudem bei Raumtemperatur (das heißt 15 bis 25°C) gehärtet werden, sodass keine explizite Zuführung von Wärme, das heißt thermischer Energie, im Rahmen einer komplexen Anlagentechnik notwendig ist, um eine gehärtete Beschichtung herzustellen. Aus einer zunächst durch die Applikation der Beschichtungszusammensetzung hergestellten Beschichtung entsteht also durch einfache Lagerung bei Raumtemperatur schließlich eine gehärtete Beschichtung.

Aufgrund der sehr guten Erosionsbeständigkeit der Beschichtungen sind bevorzugte Substrate solche, die die der Regen- oder Sanderosion besonders stark ausgesetzt sind. Als Substrate können Rotorblätter, Luft- oder Landfahrzeuge, Schiffe, Bauwerke oder Pipelines in Frage kommen. Bevorzugte Substrate sind Rotorblätter von Windenergieanlagen, Hubschraubern oder Schiffsschrauben sowie Luftfahrzeuge wie beispielsweise Flugzeuge. Insbesondere sind Rotorblätter von Windenergieanlagen und Flugzeuge geeignete Substrate.

Aus oben Gesagten folgt, das auch ein Substrat, das mit einer erfindungsgemäßen Beschichtung beschichtet ist, Gegenstand der vorliegenden Erfindung ist. Genauso folgt aus oben Gesagten, dass auch die Verwendung der erfindungsgemäßen Beschichtungszusammensetzung sowie die Verwendung einer erfindungsgemäßen Beschichtung zur Verbesserung der Erosionsbeständigkeit von Substraten, insbesondere den oben genannten Substraten, Gegenstand der vorliegenden Erfindung sind.

Möglich ist auch, dass unter Einsatz einer erfindungsgemäßen Beschichtungszusammensetzung eine Mehrschichtbeschichtung hergestellt wird. Auch eine solche Mehrschichtbeschichtung ist Gegenstand der vorliegenden Erfindung. Die aus der Beschichtungszusammensetzung hergestellte Beschichtung ist also in einer Mehrschichtbeschichtung enthalten. Bevorzugt sind Mehrschichtbeschichtungen, in denen eine erfindungsgemäße Beschichtung die Deckbeschichtung darstellt. Auf diese Weise wird ein technischer Effekt der erfindungsgemäßen Beschichtung, nämlich die hervorragende Erosionsbeständigkeit, optimal ausgenutzt. Dies bedeutet, dass alle weiteren Beschichtungsschichten unterhalb der erfindungsgemäßen Beschichtung und damit zwischen dem Substrat und der erfindungsgemäßen Beschichtung angeordnet sind. Ein Substrat, das mit einer erfindungsgemäßen Beschichtung beschichtet ist, muss also nicht in direktem Kontakt mit dieser Beschichtung stehen. Dazwischen können weitere Schichten, beispielsweise zumindest eine an sich bekannte Füllerschicht, angeordnet sein.

In der Folge wird die vorliegende Erfindung anhand von Beispielen erläutert.

### Beispiele

### 1. Prüfmethoden

### 1.1 Allgemeines

Zur labortechnischen Bestimmung der Erosionsbeständigkeit können generell unterschiedliche Gerätschaften verwendet werden, bei denen entweder das zu erodierende beschichtete Substrat durch das Erosionsmedium bewegt wird oder das Substrat feststeht und vom Erosionsmedium umströmt wird. Ein feststehender Prüfkörper kann beispielsweise durch eine Hochdruck-Wasserstrahl-Technik, welche beispielsweise beim Wasserstrahlschneiden verwendet wird, getestet werden. Die Erosionswirkung wird gesteuert durch Wasserdruck, Abstand zum Werkstück sowie Düsengröße und -art. Durch die Mitverwendung von Sand, Korund oder Siliziumcarbid kann die Wirkung weiter verstärkt werden. Weiterhin ist Sandstrahlen oder Dampfstrahlen denkbar, wobei ebenfalls durch den anliegenden Druck, Düsengröße und Abstand zum Werkstück die Erosionswirkung variiert und den Realbedingungen angepasst werden kann.

Beim Regenerosionstest für bewegte Prüfkörper wird das zu erodierende beschichtete Substrat an einem Rotor oder einer Scheibe befestigt und durch die erzeugte Radialgeschwindigkeit durch einen Vorhang aus Wassertropfen oder Gemischen mit Salz oder Sand bewegt. Das derzeit gängigste Prüfszenario, welches beispielsweise im Bereich der Windenergie verwendet wird, arbeitet bei Geschwindigkeiten von 140 m/s und einer Regenmenge von 30 l/h. Im Bereich der Flugzeugindustrie werden Geschwindigkeiten von bis zu 220 m/s bei vergleichbarer Regenmenge geprüft. Die Prüfungen zur Regenerosionsbeständigkeit können nach der Norm ASTM G 73 erfolgen. Die unter diese Norm fallenden Aufbauten sind individuell und können über Standards miteinander verglichen werden.

Den genannten Prüfmöglichkeiten ist gemein, dass reale Geschwindigkeiten, wie beispielsweise Umfangsgeschwindigkeiten von Rotorblättern oder Reisefluggeschwindigkeiten von Flugzeugen simuliert werden und die Schadensbilder den real auftretenden Schadensbildern ähnlich sind.

### 1.2 Testbedingungen

Im Rahmen der Beispiele erfolgte die Prüfung der Regenerosionsbeständigkeit nach der Norm ASTM G 73. Die Tests wurden auf einem hauseigenen Regenerosions-Prüfstand durchgeführt. Die Prüfkörper werden in bestimmten Zeitabständen (15 Minuten) bei definierter Geschwindigkeit (140 m/s) durch einen Tropfenvorhang geschleudert. Die Regenmenge wird dabei durch die angelegte Durchflussrate ebenfalls konstant gehalten (30 l/h). Die Tropfengrößen des angelegten "Regens" betragen dabei durchschnittlich 5-6 mm. Die Prüfungen erfolgen bei einer Temperatur von 20 bis 25 °C. Die Auswertung erfolgt visuell. Die Erosionsbeständigkeit entspricht der Zeit bis zum ersten Durchscheinen des Substrates.

### 2. Herstellung von Beschichtungszusammensetzungen und gehärteten Beschichtungen

Die Stammlackkomponenten und Härterkomponenten unterschiedlicher Beschichtungszusammensetzungen (E = Erfindungsgemäß, V = Vergleich) wurden durch Zusammengeben der jeweiligen Bestandteile und homogene Vermischung in einem Dissolver hergestellt (Tabelle 1). Die jeweils angegebene Viskosität wurde mit einem Rotations-Viskosimeter (Gerät HAAKE RheoStress 600, Thermo Electron Corporation) bei 23°C gemessen.

**Tabelle 1**

| **Bestandteil** | **Gewichtsteile** | | | | | | |
|---|---|---|---|---|---|---|---|
| | **E1** | **E2** | **E3** | **V1** | **E4** | **E5** | **V2** |
| **Stammlackkomponente** | | | | | | | |
| Lineares, aliphatisches Polycarbonatdiol (A) mit endständigen Hydroxylgruppen, lösemittelfrei, OH Zahl = 225 | 16,0 | 16,6 | 16,0 | 16,0 | 16,0 | 16,0 | - |
| Polyester-Acrylat-Harz (B), 75 %-ig in Methoxypropylacetat/Butylacetat, OH-Zahl = 270 | 8,7 | 9,0 | 8,7 | 8,7 | - | - | - |
| Polyester-Acrylat-Harz (B), 60 %-ig in Butylacetat/Methoxypropylacetat, OH-Zahl = 198 | - | - | - | - | 8,7 | 8,7 | 24,9 |
| Polyester/Polyether | - | - | - | - | - | - | 4,0 |
| Nicht-Organosilan-modifizierter Silikat-Füllstoff | - | - | - | 24,8 | - | - | - |
| Epoxy-Organosilan-modifiziertes Nephelin-Syenit (Füllstoff (C)) | 30,8 | 32,0 | 24,8 | - | 24,8 | | - |
| Amino-Organosilan-modifiziertes Wollastonit (Füllstoff (C)) | - | - | - | - | - | 24,8 | 23,2 |
| Molekularsieb | 3,7 | 3,9 | 3,7 | 3,7 | 3,9 | 3,7 | - |
| Additive, gegebenenfalls angelöst in organischen Lösemitteln | 4,1 | 4,3 | 4,1 | 4,1 | 4,1 | 4,1 | 4,6 |
| Farbpigment, weiß | 15,4 | - | 21,4 | 21,4 | 21,4 | 21,4 | 21,3 |
| Farbpigment, rot | - | 12,0 | - | - | - | - | - |
| Pigmentpaste, schwarz | 0,6 | | | | | | 0,5 |
| Pigmentpaste, gelb | 0,8 | - | 0,1 | 0,1 | 0,1 | 0,1 | 0,7 |
| Mattierungsmittel auf Basis pyrogener Kieselsäuren | 3,3 | 2,6 | 3,3 | 3,3 | 3,3 | 3,3 | 3,0 |
| Weitere organische Lösemittel | 16,6 | 19,6 | 17,9 | 17,9 | 17,9 | 17,9 | 17,8 |
| | | | | | | | |
| **Summe** | **100** | **100** | **100** | **100** | **100** | **100** | **100** |
| | | | | | | | |

| **Härterkomponente** | | | | | | | |
|---|---|---|---|---|---|---|---|
| HDI Isocyanurat (D), Isocyanatgehalt 23 % | 21,3 | 21,3 | 21,3 | 21,3 | 21,3 | 21,3 | 17,8 |
| Methoxypropylacetat | - | - | - | - | - | - | 4,4 |
| | | | | | | | |
| **Summe** | **121,3** | **121,3** | **121,3** | **121,3** | **121,3** | **121,3** | **122,2** |
| | | | | | | | |
| Dichte (kg/l) | 1,5 | 1,52 | 1,53 | 1,48 | 1,5 | 1,51 | 1,49 |
| Anteil an organischen Lösemitteln (g/l) | 242 | 284 | 264 | 255 | 275 | 276 | 403 |
| Viskosität bei einer Scherbelastung von 1000 1/s | 500 | 450 | 570 | 400 | 520 | 530 | 600 |
| Viskosität bei einer Scherbelastung von 1 1/s | 4100 | 4020 | 3820 | 3500 | 3750 | 3800 | 4500 |

Anschließend wurden die jeweiligen Stammlackkomponenten mit den jeweiligen Härterkomponenten in den in der Tabelle angegebenen Mengenverhältnissen homogen vermischt und direkt auf einen mit einem handelsüblichen polyharnstoffbasierten Porenfüller vorbeschichteten Epoxidharz-Prüfkörper appliziert (Airmix-Spitzapplikation). Die Härtung erfolgte durch Lagerung über einen Zeitraum von sieben Tagen bei 20 bis 25°C. Die Trockenschichtdicke betrug 300 Mikrometer.

Anschließend wurden die auf dem Substrat angeordneten Mehrschichtbeschichtungen hinsichtlich der Regenerosionsbeständigkeit untersucht (Tabelle 2).

**Tabelle 2**

| | **E1** | **E2** | **E3** | **V1** | **E4** | **E5** | **V2** |
|---|---|---|---|---|---|---|---|
| Dauer | > 300 | > 300 | > 300 | 240 | 270 | 265 | 135 |
| Regenerosionstest | Minuten | Minuten | Minuten | Minuten | Minuten | Minuten | Minuten |

Es zeigt sich, dass die auf dem Substrat angeordneten Mehrschichtbeschichtungen, die eine erfindungsgemäße Beschichtung als Deckbeschichtung enthalten, eine sehr gute Erosionsbeständigkeit aufweisen. Die Beständigkeit ist zudem signifikant besser als bei Mehrschichtbeschichtungen, bei deren Herstellung keine erfindungsgemäße Beschichtungszusammensetzung eingesetzt wurde.

Die erfindungsgemäßen Systeme haben also den Vorteil, dass die zugrunde liegenden Zusammensetzungen einfach verarbeitbar sind, insbesondere durch Spritzapplikationsverfahren auf ein Substrat aufgebracht werden können, trotzdem aber einen vergleichsweise niedrigen Gehalt an organischen Lösemitteln aufweisen und zudem zu Beschichtungen führen, die sehr erosionsbeständig sind.

## Patentansprüche

1. Lösemittelbasierte Zweikomponenten-Beschichtungszusammensetzung umfassend
(1) eine Stammlackkomponente umfassend
(A) mindestens ein Polycarbonatdiol,
(B) mindestens ein hydroxylgruppenhaltiges Acrylatharz, Polyesterharz und/oder Polyester-Acrylat-Harz mit einer Hydroxylzahl von 75 bis 500 mg KOH/g, und
(C) mindestens einen mit mindestens einem Organosilan modifizierten Füllstoff sowie
(2) eine Härterkomponente umfassend
(D) mindestens ein organisches Polyisocyanat,
wobei die Beschichtungszusammensetzung bei einer Scherbelastung von 1000 1/s und einer Temperatur von 23°C eine Viskosität von 50 bis 2000 mPa·s besitzt und einen Anteil an organischen Lösemitteln von 100 bis 350 g/l aufweist, wobei die Viskosität gemäß DIN 53019 bestimmt wird.

2. Zweikomponenten-Beschichtungszusammensetzung nach Anspruch 1, **dadurch gekennzeichnet, dass** das mindestens eine Polycarbonatdiol (A) eine Hydroxylzahl von 50 bis 500 mg KOH/g aufweist.

3. Zweikomponenten-Beschichtungszusammensetzung nach Anspruch 1 oder 2, **dadurch gekennzeichnet, dass** das mindestens eine Polycarbonatdiol (A) ein aliphatisches und lineares Polycarbonatdiol ist.

4. Zweikomponenten-Beschichtungszusammensetzung nach einem der Ansprüche 1 bis 3, **dadurch gekennzeichnet, dass** das mindestens eine Acrylatharz, Polyesterharz und/oder Polyester-Acrylat-Harz (B) eine Hydroxylzahl von 175 bis 400 mg KOH/g aufweist.

5. Zweikomponenten-Beschichtungszusammensetzung nach einem der Ansprüche 1 bis 4, **dadurch gekennzeichnet, dass** der mindestens eine mit mindestens einem Organosilan modifizierten Füllstoff (C) ausgewählt wird aus der Gruppe der mit mindestens einem Organosilan modifizierten Silikate.

6. Zweikomponenten-Beschichtungszusammensetzung nach einem der Ansprüche 1 bis 5, **dadurch gekennzeichnet, dass** der mit mindestens einem Organosilan modifizierte Füllstoffe (C) herstellbar ist durch Modifizierung eines anorganisches Füllstoffs mit Organosilanen der Formel (I)
X₄₋ₙ₋ₘSi-Rₙ(-A-B)ₘ (I)
wobei
X = OH, Halogen, Alkoxy, insbesondere Methoxy und Ethoxy, Aryloxy,
R = Alkyl, bevorzugt C₁ bis C₁₂-Alkyl, Phenyl oder H,
A = zweibindiger organischer Rest, insbesondere zweibindiger Alkylenrest, bevorzugt C₁ bis C₆-Alkylen, insbesondere C₁ bis C₃-Alkylen,
B = Amino-, Hydroxyl-, Epoxy-, Epoxypropyloxy, Hydroxyalkyl-, Acetoxy-, Isocyanat-, Acryloxy-, Methacryloxy-, Imidazol-, Ureido-,Vinylgruppe,
n, m = 0,1,2,3, mit n+m ≤ 3, bevorzugt 1 ≤ n+m ≤ 3.

7. Zweikomponenten-Beschichtungszusammensetzung nach einem der Ansprüche 1 bis 6, **dadurch gekennzeichnet, dass** das mindestens eine organische Polyisocyanat einen Isocyanatgehalt von 16 bis 24 % aufweist.

8. Zweikomponenten-Beschichtungszusammensetzung nach einem der Ansprüche 1 bis 7, **dadurch gekennzeichnet, dass** das mindestens eine organische Polyisocyanat ein Isocyanurat von Hexamethylendiisocyanat ist.

9. Zweikomponenten-Beschichtungszusammensetzung nach einem der Ansprüche 1 bis 8, **dadurch gekennzeichnet, dass** sie einen Anteil an organischen Lösemitteln von 150 bis 300 g/l aufweist.

10. Zweikomponenten-Beschichtungszusammensetzung nach einem der Ansprüche 1 bis 9, **dadurch gekennzeichnet, dass** sie bei einer Scherbelastung von 1 1/s und einer Temperatur von 23°C eine Viskosität von 1000 bis 10000 mPa·s aufweist, mit der Maßgabe, dass die Viskosität bei 1 1/s, 23°C um einen Faktor von 4 bis 20 höher ist als die Viskosität der Beschichtungszusammensetzung bei einer Scherbelastung von 1000 1/s, 23°C, wobei die Viskosität gemäß DIN 53019 bestimmt wird.

11. Verfahren zur Herstellung einer Beschichtung auf einem Substrat umfassend die Spritzapplikation einer Beschichtungszusammensetzung gemäß einem der Ansprüche 1 bis 10 auf ein Substrat.

12. Verfahren nach Anspruch 11, **dadurch gekennzeichnet, dass** die durch Applikation hergestellte Beschichtung bei einer Temperatur von nicht mehr als 80°C, bevorzugt 15 bis 60°C, gehärtet wird.

13. Beschichtung, herstellbar nach einem Verfahren gemäß einem der Ansprüche 11 oder 12.

14. Mehrschichtbeschichtung, die eine Beschichtung nach Anspruch 13 als Deckbeschichtung umfasst.

15. Verwendung einer Beschichtung gemäß Anspruch 13 oder einer Mehrschichtbeschichtung gemäß Anspruch 14 zur Verbesserung der Erosionsbeständigkeit von Substraten.

## Claims

1. Solvent-based two-component coating composition comprising
(1) a paint base component comprising
(A) at least one polycarbonate diol,
(B) at least one hydroxyl-containing acrylate resin, polyester resin and/or polyester acrylate resin having a hydroxyl number of 75 to 500 mg KOH/g, and
(C) at least one filler modified with at least one organosilane and
(2) a hardener component comprising
(D) at least one organic polyisocyanate,
wherein the coating composition has a viscosity of 50 to 2000 mPa*s at a shear stress of 1,000 1/s and a temperature of 23°C and a content of organic solvents of 100 to 350 g/L, wherein the viscosity is measured according to DIN 53019.

2. Two-component coating composition according to claim 1, **characterized in that** the at least one polycarbonate diol (A) has a hydroxyl number of 50 to 500 mg KOH/g.

3. Two-component coating composition according to claim 1 or 2, **characterized in that** the at least one polycarbonate diol (A) is an aliphatic and linear polycarbonate diol.

4. Two-component coating composition according to any one of claims 1 to 3, **characterized in that** the at least one acrylate resin, polyester resin and/or polyester acrylate resin (B) has a hydroxyl number of 175 to 400 mg KOH/g.

5. Two-component coating composition according to any one of claims 1 to 4, **characterized in that** the at least one filler modified with at least one organosilane (C) is selected from the group of the silicates modified with at least one organosilane.

6. Two-component coating composition according to any one of claims 1 to 5, **characterized in that** the filler modified with at least one organosilane (C) is obtainable by modification of an inorganic filler with an organosilane of formula (I)
X₄₋ₙ₋ₘSi-Rₙ(-A-B)ₘ (I)
wherein
X = OH, halogen, alkoxy, in particular methoxy and ethoxy, aryloxy,
R = alkyl, preferably C₁ to C₁₂-alkyl, phenyl or H,
A = divalent organic radical, especially divalent alkylene radical, preferably C₁ to C₆-alkylene, especially C₁ to C₃-alkylene,
B = amino, hydroxyl, epoxy, epoxypropyloxy, hydroxyalkyl, acetoxy, isocyanate, acryloyloxy, methacryloyloxy, imidazole, ureido, vinyl group,
n, m = 0, 1, 2, 3, with n+m ≤ 3, preferably 1 ≤ n+m ≤ 3.

7. Two-component coating composition according to any one of claims 1 to 6, **characterized in that** the at least one organic polyisocyanate has an isocyanate content of 16% to 24%.

8. Two-component coating composition according to any one of claims 1 to 7, **characterized in that** the at least one organic polyisocyanate is an isocyanurate of hexamethylene diisocyanate.

9. Two-component coating composition according to any one of claims 1 to 8, **characterized in that** it has a content of organic solvents of 150 to 300 g/L.

10. Two-component coating composition according to any one of claims 1 to 9, **characterized in that** it has a viscosity of 1,000 to 10,000 mPa·s at a shear stress of 1 1/s and a temperature of 23°C, with the proviso that the viscosity at 1 1/s, 23°C is a factor 4 to 20 higher than the viscosity of the coating composition at a shear stress of 1,000 1/s, 23°C, wherein the viscosity is measured according to DIN 53019.

11. Method for producing a coating on a substrate, comprising spray application of a coating composition according to any one of claims 1 to 10 to a substrate.

12. Method according to claim 11, **characterized in that** the coating produced by application is cured at a temperature of not more than 80°C, preferably 15 to 60°C.

13. Coating obtainable by a method according to claim 11 or 12.

14. Multicoat coating which comprises as topcoat a coating according to claim 13.

15. Use of a coating according to claim 13 or of a multicoat coating according to claim 14 for improving erosion resistance of substrates.

## Revendications

1. Composition de revêtement bicomposante à base de solvants, comprenant :
(1) un composant vernis de base, comprenant :
(A) au moins un polycarbonate-diol,
(B) au moins une résine d'acrylate, une résine de polyester et/ou une résine de polyester-acrylate contenant des groupes hydroxyle, ayant un indice hydroxyle de 75 à 500 mg de KOH/g, et
(C) au moins une charge modifiée avec au moins un organosilane,
ainsi que
(2) un composant agent de durcissement, comprenant :
(D) au moins un polyisocyanate organique,
la composition de revêtement présentant à un cisaillement de 1 000 1/s et à une température de 23 °C une viscosité de 50 à 2 000 mPa*s et présentant une proportion de solvants organiques de 100 à 350 g/l, dans laquelle la viscosité est mesurée selon la norme DIN 53019.

2. Composition de revêtement bicomposante selon la revendication 1, **caractérisée en ce que** ledit au moins un polycarbonate-diol (A) présente un indice hydroxyle de 50 à 500 mg de KOH/g.

3. Composition de revêtement bicomposante selon la revendication 1 ou 2, **caractérisée en ce que** ledit au moins un polycarbonate-diol (A) est un polycarbonate-diol aliphatique et linéaire.

4. Composition de revêtement bicomposante selon l'une quelconque des revendications 1 à 3, **caractérisée en ce que** ladite au moins une résine d'acrylate, résine de polyester et/ou résine de polyester-acrylate (B) présente un indice hydroxyle de 175 à 400 mg de KOH/g.

5. Composition de revêtement bicomposante selon l'une quelconque des revendications 1 à 4, **caractérisée en ce que** ladite au moins une charge modifiée avec au moins un organosilane (C) est choisie dans le groupe des silicates modifiés avec au moins un organosilane.

6. Composition de revêtement bicomposante selon l'une quelconque des revendications 1 à 5, **caractérisée en ce que** la charge modifiée avec au moins un organosilane (C) peut être fabriquée par modification d'une charge inorganique avec des organosilanes de formule (I)
X₄₋ₙ₋ₘSi-Rₙ(-A-B)ₘ (I)
dans laquelle
X = OH, halogène, alcoxy, notamment méthoxy et éthoxy, aryloxy,
R = alkyle, de préférence alkyle en C₁ à C₁₂, phényle ou H,
A = radical organique bivalent, notamment radical alkylène bivalent, de préférence alkylène en C₁ à C₆, notamment alkylène en C₁ à C₃,
B = groupe amino, hydroxyle, époxy, époxypropyloxy, hydroxyalkyle, acétoxy, isocyanate, acryloxy, méthacryloxy, imidazole, uréido, vinyle,
n, m = 0, 1, 2, 3, avec n+m ≤ 3, de préférence 1 ≤ n+m ≤ 3.

7. Composition de revêtement bicomposante selon l'une quelconque des revendications 1 à 6, **caractérisée en ce que** ledit au moins un polyisocyanate organique présente une teneur en isocyanate de 16 à 24 %.

8. Composition de revêtement bicomposante selon l'une quelconque des revendications 1 à 7, **caractérisée en ce que** ledit au moins un polyisocyanate organique est un isocyanurate de diisocyanate d'hexaméthylène.

9. Composition de revêtement bicomposante selon l'une quelconque des revendications 1 à 8, **caractérisée en ce qu'**elle présente une proportion de solvants organiques de 150 à 300 g/l.

10. Composition de revêtement bicomposante selon l'une quelconque des revendications 1 à 9, **caractérisée en ce qu'**elle présente à un cisaillement de 1 1/s et à une température de 23 °C une viscosité de 1 000 à 10 000 mPa·s, à condition que la viscosité à 1 1/s, 23 °C soit supérieure d'un facteur de 4 à 20 à la viscosité de la composition de revêtement à un cisaillement de 1 000 1/s, 23 °C, dans laquelle la viscosité est mesurée selon la norme DIN 53019.

11. Procédé de fabrication d'un revêtement sur un substrat, comprenant l'application par pulvérisation d'une composition de revêtement selon l'une quelconque des revendications 1 à 10 sur un substrat.

12. Procédé selon la revendication 11, **caractérisé en ce que** le revêtement fabriqué par l'application est durci à une température inférieure ou égale à 80 °C, de préférence de 15 à 60 °C.

13. Revêtement, pouvant être fabriqué par un procédé selon l'une quelconque des revendications 11 ou 12.

14. Revêtement multicouche, qui comprend un revêtement selon la revendication 13 en tant que revêtement supérieur.

15. Utilisation d'un revêtement selon la revendication 13 ou d'un revêtement multicouche selon la revendication 14 pour améliorer la résistance à l'érosion de substrats.
